Europäisches Patentamt

European Patent Office

Office européen des brevets

(19)

(11) Veröffentlichungsnummer : **0 120 391**
**B1**

(12) # EUROPÄISCHE PATENTSCHRIFT

(45) Veröffentlichungstag der Patentschrift :
10.09.86

(21) Anmeldenummer : 84102696.6

(22) Anmeldetag : 12.03.84

(51) Int. Cl.⁴ : **B 25 J 15/00, B 25 J 19/00**

(54) Greifer für Industrieroboter.

(30) Priorität : 21.03.83 DE 3310191

(43) Veröffentlichungstag der Anmeldung :
03.10.84 Patentblatt 84/40

(45) Bekanntmachung des Hinweises auf die Patenterteilung : 10.09.86 Patentblatt 86/37

(84) Benannte Vertragsstaaten :
AT CH DE FR GB LI SE

(56) Entgegenhaltungen :
EP-A- 0 036 912
EP-A- 0 044 245
US-A- 3 963 271
PATENT ABSTRACTS OF JAPAN, unexamined applications, Sektion M, Band 1, No. 2, 4. März 1977, THE
PATENT OFFICE JAPANESE GOVERNMENT, Seite
196 M 76
PATENT ABSTRACTS OF JAPAN, unexamined applications, Sektion M, Band 4, No. 13 (M-90), 30. Januar
1980, THE PATENT OFFICE JAPANESE GOVERN-
MENT, Seite 40 M 90

(73) Patentinhaber : Manutec Gesellschaft für Automati-
sierungs- und Handhabungssysteme mbH
Gründlacher Strasse 248
D-8510 Fürth (DE)

(72) Erfinder : Keppler, Rainer
Gartenstrasse 24
D-8523 Baiersdorf (DE)
Erfinder : Hartmann, Rudolf-Peter, Dipl.-Ing.
Storchenweg 14
D-8501 Oberasbach (DE)
Erfinder : Achauer, Günther
Kennedy-Strasse 79
D-8450 Amberg (DE)

(74) Vertreter : Mehl, Ernst, Dipl.-Ing. et al
Postfach 22 01 76
D-8000 München 22 (DE)

# Beschreibung

Die Erfindung bezieht sich auf einen Greifer für Industrieroboter, bei dem der die beweglichen Greifglieder tragende Greiferoberteil gegenüber dem mit dem Roboterarm verbindbaren Greiferunterteil gegen rückstellende Federkraft verschiebbar gelagert ist.

Bei starr an einem Roboter befestigten Greifern können bei fehlpositionierten Werkstücken oder Werkstücken mit Maßabweichungen Beschädigungen des Werkstückes auftreten. Durch eine nachgiebige Aufhängung des Greiferoberteils lassen sich derartige Schäden vermeiden und gleichzeitig die Fehler soweit ausgleichen, daß trotz der Fehlpositionierung der Montagevorgang ausgeführt werden kann. In der europäischen Patentanmeldung EP-A1-0 036 912 sind verschiedene Möglichkeiten einer derartigen elastischen Lagerung des Greiferoberteils beschrieben. Bei einem ersten Ausführungsbeispiel sind zwischen dem Greiferoberteil und dem Greiferunterteil zwei Blattfederpaare angeordnet. Bei einer zweiten Ausführungsform ist eine Kreuzschlittenführung zwischen den beiden Teilen vorgesehen. Eine weitere Ausführungsform zeichnet sich dadurch aus, daß ein Kugelgelenk zwischen dem am Roboterarm befestigten Roboterunterteil und dem die Greiffinger tragenden Oberteil vorgesehen ist.

Bei den Ausführungen mit Blattfedern und Kugelgelenk wird bei einer seitlichen Auslenkung in der Regel auch die Achsrichtung des Greiferoberteils mit den Greifgliedern geändert. Dies ist z. B. bei zu fügenden Werkstücken z. B. einem Paßbolzen, der in eine Paßbohrung eingeführt werden soll, nicht zulässig. Bei der Anordnung mit Kreuzschlitten und Federrückholung wird dieser Effekt vermieden, jedoch ist es hier sehr schwer, die Schlitten gleichzeitig so zu führen, daß der Greifer genau in Richtung der angreifenden Kraft ausweicht.

Bei z. B. der automatischen Montage mit Industrierobotern wird ferner zum Längenausgleich von Bauteile oder dergleichen gefordert, daß das Greiferoberteil mit den Greifgliedern unabhängig von der Roboterwegung in Greiferlängsrichtung ausweichen kann.

Die Aufgabe der vorliegenden Erfindung besteht darin, einen Greifer zu schaffen, bei dem das die Greifglieder tragende Greiferoberteil genau in Richtung der angreifenden Kräfte definiert ausweichen kann.

Diese Aufgabe wird erfindungsgemäß durch folgende Merkmale gelöst :

a) Zwischen dem Greiferoberteil und einem mit ihm über Federn vespannten Tragteil sind Kugeln zur schwimmenden Lagerung in der zur Greiferlängsachse senkrechten Ebene vorgesehen und

b) das Tragteil ist axial gegen Federkraft verschiebbar im Greiferunterteil geführt.

Damit ergibt sich eine stabile und doch zugleich allen Toleranzanforderungen gerecht werdende Halterung des Greifoberteils. Konstruktiv ist die Anordnung mit Vorteil so getroffen, daß die zur schwimmenden Lagerung dienenden Kugeln auf kreisringförmigen Bahnen um die Greiferlängsachse geführt sind. Zur Verbesserung der Schwimmenden Lagerung kann es gelegentlich auch noch von Vorteil sein, wenn kreisringförmige Bahnen mit Kugeln in mehreren parallelen Ebenen vorgesehen sind.

Zur Rückstellung und Begrenzung der Auslenkung können federbelastete Druckstücke dienen.

Diese können aus federbelasteten, axial geführten Zentrierbolzen bestehen, die an den einander zugewandten enden mit kegel- oder halbkugelförmigen Vertiefungen zur Aufnahme von angepaßten Zentrierkugeln versehen sind.

Das den Greiferoberteil tragende Tragteil kann durch den im Greiferunterteil axial beweglich geführten Zylindermantel eines Zentralantriebs der Greifglieder gebildet sein.

Zur Erfassung der Relativbewegung zwischen Tragteil und Greiferunterteil und/oder zwischen Tragteil und Greiferoberteil sind vorteilhafterweise Weggeber vorgesehen. Die damit ermittelten Verschiebungen können als Korrekturwerte an die Steuerung gegeben und auch gegebenenfalls als Montagekontrolle verwendet werden.

Die Erfindung wird anhand eines in der Zeichnung dargestellten Ausführungsbeispiels näher erläutert es zeigen :

Figur 1 den prinzipiellen Aufbau eines Industrie-Gelenk-Roboters mit Greifer,

Figuren 2 und 3 längsschnitte durch den Greifer und

Figur 4 eine Draufsicht auf den Greifer.

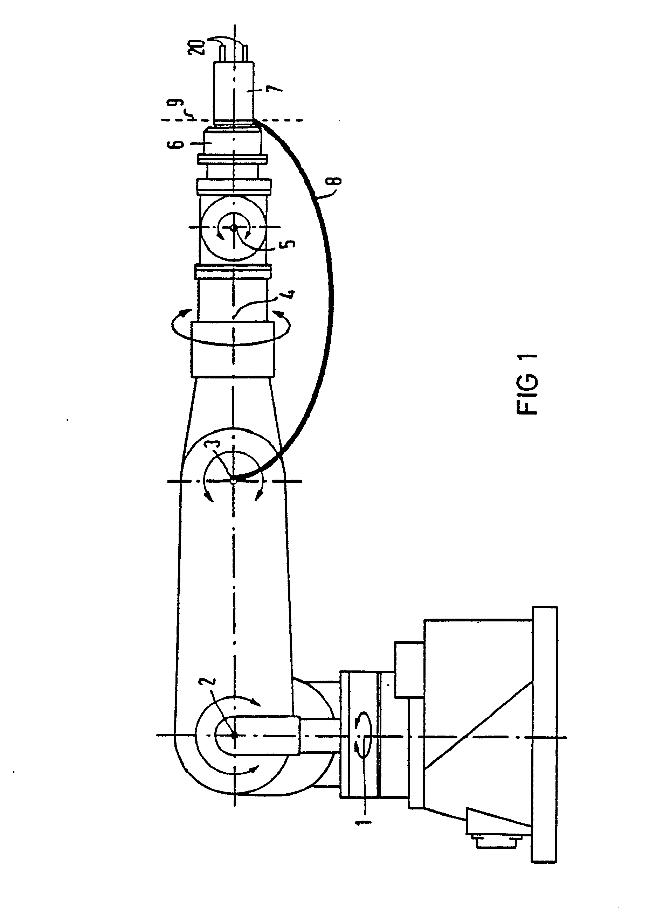

Der in Figur 1 schematisch dargestellte Gelenkroboter hat sechs Gelenke 1 bis 6, durch die jeweils Drehunge in sechs Achsen möglich sind. Wie ersichtlich, trägt der Roboter am Ende des Armes mit den Gelenken 1 bis 6 einen Greifer 7, mit den in der Greifebene parallel bewegbaren Greiferfingern 20. Die Druckluftzuleitungen 8 für den pneumatischen Linearantrieb der Greiferfinger 20 laufen z. B. vom Gelenk 3 über eine hier gestrichelt angedeutete Sollbruchstelle 9 zum Linearantrieb. Stößt der Greifer 7 ungewollt an ein Hindernis, so bricht die mechanische Verbindung zwischen Greifer 7 und Gelenk 6 des Roboterarms an der Sollbruchstelle 9.

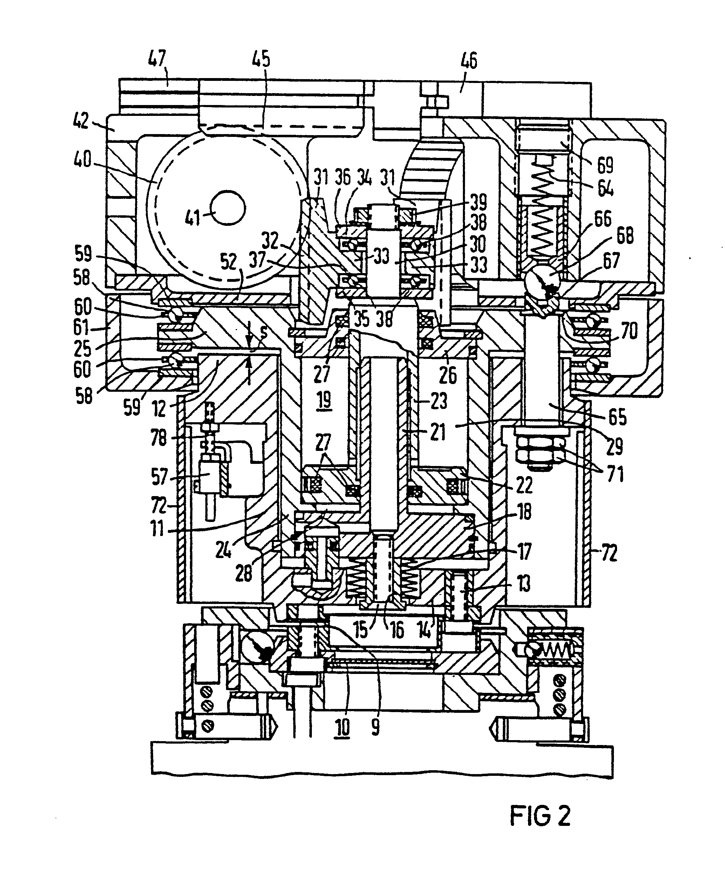

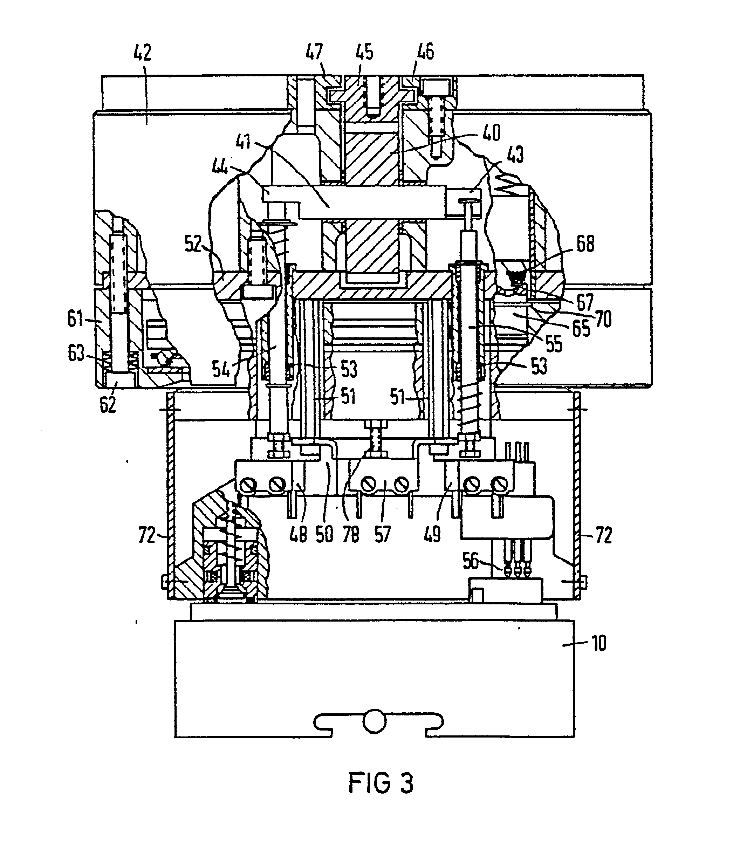

Wie Figuren 2 und 3 zeigen, ist der Greifer 7 über eine mechanische Kupplung 10, in der auch die mechanische Sollbruchstelle 9 liegt, mit dem Gelenk 6, d. h. dem Ende des Roboterarms, verbindbar. Gleichzeitig laufen durch diese Kupplung 10 die elektrischen und pneumatischen Versorgungsleitungen zum Greifer 7.

Der Greifer 7 besteht aus einem als becherförmiges Drehteil ausgebildeten Außenmantel 11, dessen oberes Ende in einer Ringschulter 12 ausläuft und dessen unteres Ende über Schrauben 13 im Bodenteil 14 über die Sollbruchstelle 9 mit der Kupplung 10 verbunden ist. Am Bodenteil 14 ist mit geringem Abstand über eine von einer Schraube 15 mit Buchse 16 geführte Feder 17 der Zylinderboden 18 des zentralen Linearantriebes 19 der Greiferfinger 20 abgestützt.

Der Zylinderboden 18 ist mit einem zentrischen Hohlzapfen 21 versehen, auf dem koaxial Kolben 22 und hohlzylindrische Kolbenstange 23 geführt sind. Gleichzeitig kann über den Hohlzapfen 21 auch das Druckmedium auf die gegenüberliegende Kolbenraumseite geführt werden.

Das im Außenmantel 11 axial verschiebbar geführte Zylinderrohr (Zylindermantel) 24 des Antriebs 19, das gleichzeitig als Tragteil für das Greiferoberteil dient, läuft am oberen Ende in eine auskragende Ringschulter 25 aus, nimmt am unteren Ende den Zylinderboden 18 auf und wird am oberen Ende von Zylinderdeckel 26 abgeschlossen. Ferner sind Dichtungen 27 für Kolben 22 und Kolbenstange 23 vorgesehen.

Je nach dem, ob Druckluft in dem Raum 28 unterhalb des Kolbens 22 oder in den Raum 29 über den Kolben 22 eingeleitet wird, bewegt sich der Kolben 22 und damit die durch den Deckel 26 geführte Kolbenstange 23 nach oben oder unten. Durch den Hohlzapfen 21 wird dabei dafür gesorgt, daß die jeweils oben bzw. unten mit Druckluft beaufschlagbaren Kolbenflächen in etwa gleich sind, so daß bei gleichen Drücken in etwa gleiche Kräfte in beiden Richtungen ausgeübt werden können. Auf dem zylindrischen Kolbenstangenende 30 der Kolbenstange 23 sind drei um 120° gegeneinander am Kolbenstangenumfang versetzte Zahnstangen 31 parallel zur Kolbenstange in einer Halterung befestigt. Im folgenden ist nur die Kraftübertragung von der Kolbenstange auf einen der drei Finger 20 beschrieben, wobei die hierzu getroffenen Ausführungen sinngemäß auch für die anderen Finger gelten.

Zur Halterung der Zahnstange sind die der Zahnreihe 32 abgewandten und abgestuften Enden 33 der Zahnstange 31 jeweils über Kugelhalter 34, 35 mit Kugeln 38 längs des betreffenden Umfanges zwischen Lagerscheiben 36, 37 spielfrei eingespannt. Die Vorspannung der Halterung ist durch eine Wellenmutter 39 auf dem Kolbenstangenende 30 einstellbar. Durch die Kugeln 38 sind gegebenenfalls begrenzte Radialbewegungen relativ zur Kolbenstange 23 ausführbar.

Die zur Kolbenstange 23, d. h. der Längsachse parallele Zahnreihe 32 der Zahnstange 31 greift in ein Umlenkritzel 40 ein. Die senkrecht zur Längsachse liegende Welle 41 dieses gezeigten Umlenkritzels 40 ist in der den Greiferoberteil bildenden Haube 42 gelagert. Im speziellen Fall ist die hier gezeigte Welle 41 (vgl. Figur 3) gleichzeitig auch als Schaltwelle ausgebildet und daher an den Enden mit den Schaltnocken 43, 44 versehen.

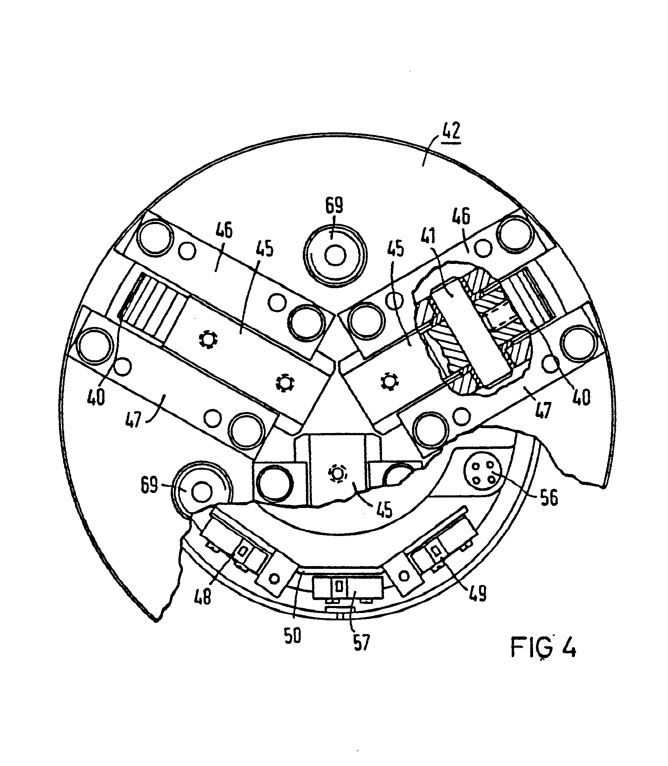

Das Umlenkritzel 40 greift wiederum in eine der um 120° versetzten, symmetrisch zur X-Achse liegenden Zahnstangen 45 (vgl. Figur 4) ein. Diese Zahnstange 45 bildet dann jeweils eine Grundbacke zur Halterung eines der Finger 20. Diese radial zum Mittelpunkt in der Greifebene verschiebbaren Zahnstangen 45 sind dabei jeweils zwischen zwei mit der Oberseite der Haube 42 verschraubten Leisten 46, 47 geführt.

Je nach der Bewegungsrichtung des Kolbens 22 können durch die Zahnstangen 45 (vgl. Figur 4) die zugehörigen Greifglieder, d. h. Finger, gleichzeitig mit einem einzigen Zentralantrieb 19 aufeinander zu oder voneinander weg bewegt weren.

Zur Meldung der Endlagen der Greiferfinger 20 dienen im Greifer 7 integrierte Endschalter 48, 49, die mit Haltewinkel 50 und Abstandsbolzen 51 an der zwischen Zylinderrohr 24 und Haube 42 liegenden Zwischenplatte 52 befestigt sind. Zur Betätigung der Endschalter 48, 49 sind von den Schaltnocken 44, 43 der Schaltwelle 41 betätigte, in Buchsen 53 geführte Stößel 54, 55 vorgesehen. Über eine elektrische Kontaktverbindung 56 werden die beiden Endschalter 48, 49 und gegebenenfalls weitere elektrische Verbraucher oder Geber im Greifer mit dem Roboter verbunden.

Ein ebenfalls am Haltewinkel 50 befestigter Endschalter 57 wird durch einen im Außenmantel 11 festgelegten Schaltstift 78 betätigt, falls eine axiale Relativbewegung zwischen Außenmantel 11, d. h. dem Greiferunterteil und der mit der Haube 42 verbundenen Zwischenplatte 52, d. h. dem Greiferoberteil, zustande kommt und damit der Spalt s verringert wird.

Diese Relativbewegung ist in Form eines gefederten Hubes durch die Feder 17 zwischen Außenmantel 11 und Antrieb 19 möglich und hat den Hintergrund, daß es z. B. bei der automatischen Montage zum Längenausgleich erforderlich ist, einen Weg in Achsrichtung des Greifers 7 — und zwar unabhängig von der Roboterbewegung — zuzulassen.

Neben oder anstelle der Bewegungserfassung mit Endschalter 57 kann ein digitaler oder analoger Wegmeßgeber treten, so daß der Wert der Relativbewegung als Korrekturinformation an die Robotersteuerung gegeben werden kann.

Um Positionierfehler des Industrieroboters und/oder der zu greifenden Teile ohne Änderung der Achsrichtung des zu fügenden Werkstückes ausgleichen zu können, ist eine zweiachsig schwimmende Lagerung des Greiferoberteils in der Radialebene vorgesehen.

Diese Lagerung besteht aus einer Vielzahl von Kugeln 58, die auf beiden Seiten der als Tragteil dienenden Ringschulter 25 in zwei kreisringförmigen Führungsbahnen 59 mit Kugelkäfigen 60 geführt sind. Die kreisringförmigen Bahnen haben dabei in etwa fast den Durchmesser des Greifers. Die Kugeln auf den beiden kreisringförmigen Bahnen zu beiden Seiten der Ringschulter, sind zwischen der Zwischenplatte 52 und einem L-förmigen Führungsring 61 mit am Umfang verteilten, in die Haube 42 eingreifenden Zylinderschrauben 62 und Federn 63 mit definierter Vorspannung eingespannt. Hierdurch ist — neben dem Hub in X-Richtung — eine begrenzte Bewegung in der Radialebene möglich, wobei zur kreisförmigen Begrenzung dieser Bewegung und zur Rückstellung bei einer Auslenkung federnde Druckstücke am Umfang in der Nähe der Kugeln vorgesehen sind. Diese Druckstücke bestehen jeweils aus federbelasteten, mit den Enden gegenüberliegenden Zentrierbolzen 65, 66, die zwischen sich jeweils in etwa kegel- oder halbkugelförmigen Vertiefungen 67 ruhende Zentrierkugeln 68 aufnehmen. Der in einer Ausnehmung der Haube 42 endende und von der Haube 42 axial geführte Zentrierbolzen 66 ist durch eine Feder 64 belastet, wobei die Federkraft mit der Druckschraube 69 einstellbar ist. Der auf der Ringschulter 25 des Zylindermantels mit einer Schulter 70 aufsitzende Zentrierbolzen 65 ist durch die Ringschulter 12 im Außenmantel geführt, so daß Außenmantel 11 und Zylinder mittels der Schraubmuttern 71 — gegen die Wirkung der Feder 17 — definiert gegeneinander verspannt werden können.

Bei einer seitlichen Auslenkung werden die am Umfang verteilten Bolzen 65, 66 gegeneinander seitlich entsprechend verschoben, wobei die zulässige Auslenkung durch die Gestaltung der Vertiefungen 67 gegeben ist. Die Rückstellkraft wird dann durch die federbelasteten Kugeln 68 erzeugt.

Auch die seitliche Auslenkung wird mit Vorteil über einen zweiachsigen Weggeber ermittelt und als Korrekturwert der Positioniersteuerung des Roboters zugeführt. Durch die Verwendung der seitlichen Versetzung und des axialen Hubes kann man eine selbstanpassende Regelung der Positionierung aufbauen.

Nach außen ist das Unterteil des Greifers durch eine Abdeckung 72 geschützt.

**Patentansprüche**

1. Greifer (7) für Industrieroboter, bei dem das die beweglichen Greifglieder tragende Greiferoberteil (42) gegenüber dem mit dem Roboterarm verbindbaren Greiferunterteil (11) gegen rückstellende Federkraft (17) verschiebbar gelagert ist, gekennzeichnet durch folgende Merkmale :

a) Zwischen dem Greiferoberteil (42) und einem mit ihm über Federn (63) verspannten Tragteil (24) sind Kugeln (58) zur schwimmenden Lagerung in der zur Greiferlängsachse senkrechten Ebene vorgesehen und

b) das Tragteil (24) ist axial gegen Federkraft (17) verschiebbar im Greiferunterteil (11) geführt.

2. Greifer nach Anspruch 1, dadurch gekennzeichnet, daß die zur schwimmenden Lagerung dienenden Kugeln (58) auf kreisringförmigen Bahnen um die Greiferlängsachse geführt sind.

3. Greifer nach Anspruch 2, dadurch gekennzeichnet, daß kreisringförmige Bahnen mit Kugeln (58) in mehreren zueinander parallelen Ebenen vorgesehen sind.

4. Greifer nach Anspruch 1 bis 3, dadurch gekennzeichnet, daß zur Begrenzung und Rückstellung des Greiferoberteils (42) federbelastete Druckstücke dienen.

5. Greifer nach Anspruch 4, dadurch gekennzeichnet, daß die Druckstücke aus federbelasteten, axial in Oberteil (42) und Tragteil (24) geführten und einander gegenüberliegenden Zentrierbolzen (65, 66) bestehen, die an den einander zugewandten Enden mit kegel- oder halbkugelförmigen Vertiefungen (67) zur Aufnahme von Zentrierkugeln (68) versehen sind.

6. Greifer nach Anspruch 1, dadurch gekennzeichnet, daß das Tragteil (24) durch den im Greiferunterteil (11) axial beweglich geführten Zylindermantel des Zentralantriebes (19) der Greifglieder (20) gebildet ist.

7. Greifer nach Anspruch 1, dadurch gekennzeichnet, daß die Relativbewegungen zwischen Tragteil (24) und Greiferunterteil (11) und/oder zwischen Tragteil (24) und Greiferoberteil (42) mittels Weggeber erfaßbar sind.

**Claims**

1. A gripper (7) for industrial robots, in which the gripper top (42) which supports the movable gripping elements is positioned so as to be displaceable against a resetting spring force (17) with respect to the gripper base (11) which can be connected to the robot arm, characterised by the following features :

a) balls (58) are arranged between the gripper top (42) and a supporting member (24) braced thereto by means of springs (63) for the floating mounting in the plane at right angles to the longitudinale axis of the gripper, and

b) the supporting member (24) is guided in the gripper base (11) so as to be axially displaceable against the spring force (17).

2. A gripper as claimed in claim 1, characterised in that the balls (58) serving for the floating mounting are guided around the longitudinal axis of the gripper along circular paths.

3. A gripper as claimed in Claim 2, characterised in that circular paths with balls (58) are provided in a plurality of mutually parallel planes.

4. A gripper as claimed in Claim 1 to 3, characterised in that spring-loaded pressure members serve to restrict and reset the gripper top (42).

5. A gripper as claimed in Claim 4, characterised in that the pressure members consist of spring-loaded centering bolts (65, 66) which are located opposite one another and are axially guided in the top (42) and the supporting member (24), and which, at the ends facing one another are provided with conical or semi-spherical recesses (67) for accommodating centering balls (68).

6. A gripper as claimed in Claim 1, characterised in that the supporting member (24) is formed by the cylindrical jacket of the central drive (19) of the gripping elements (20) which is guided in the gripper base (11) so as to be axially movable.

7. A gripper as claimed in Claim 1, characterised in that the relative movement between the supporting member (24) and the gripper base (11) and/or between the supporting member (24) and the gripper top (42) can be detected by means of a motion pickup.

## Revendications

1. Pince (7) pour robots industriels, dans laquelle la partie supérieure (42) de la pince, qui porte les organes de préhension mobiles, est montée de façon à pouvoir se déplacer par rapport à la partie (11) de la pince, qui peut être reliée au bras du robot, à l'encontre d'une force élastique de rappel (17), caractérisée par les particularités suivantes :

a) entre la partie supérieure (42) de la pince et un élément de support (24) serré avec cette partie supérieure par l'intermédiaire de ressorts (63), il est prévu des billes (58) servant à réaliser le soutien flottant dans le plan perpendiculaire à l'axe longitudinal de la pince, et

b) l'élément de support (24) est guidé dans la partie inférieure (11) de la pince de manière à pouvoir avoir un déplacement axial à l'encontre de la force élastique (17).

2. Pince suivant la revendication 1, caractérisée par le fait que les billes (58), qui servent à réaliser le soutien flottant, sont guidées sur des pistes en forme d'anneaux circulaires, autour de l'axe longitudinal de la pince.

3. Pince suivant la revendication 2, caractérisée par le fait que les pistes en forme d'anneaux circulaires sont munies de billes (58) situées dans plusieurs plans parallèles entre eux.

4. Pince suivant les revendications 1 à 3, caractérisée par le fait qu'on utilise des organes de compression chargés par des ressorts pour réaliser la limitation du déplacement et le rappel de la partie supérieure (42) de la pince.

5. Pince suivant la revendication 4, caractérisée par le fait que les organes de compression sont constitués par des boulons de centrage (65, 66) chargés par des ressorts et guidés axialement dans la partie supérieure (42) et dans l'élément de support (24) et disposés mutuellement en vis-à-vis et qui comportent, au niveau de leurs extrémités se faisant face, des renfoncements (67) de forme conique ou hémisphérique servant à recevoir des billes de centrage (68).

6. Pince suivant la revendication 1, caractérisée par le fait que l'élément de support (24) est formé par l'enveloppe cylindrique, guidée de manière à être déplaçable axialement dans la partie inférieure (11) de la pince, du dispositif central d'entraînement (19) des organes de préhension (20).

7. Pince suivant la revendication 1, caractérisée par le fait que les déplacements relatifs entre l'élément de support (24) et la partie inférieure (11) de la pince et/ou entre l'élément de support (24) et la partie supérieure (42) de la pince peuvent être détectés à l'aide de capteurs de déplacements.

FIG 1

FIG 2

FIG 3

FIG 4